# EUROPEAN PATENT APPLICATION

(11) **EP 2 605 365 A1**
(43) Date of publication of application: **19.06.2013**
(21) Application number: 10762704.4
(22) Date of filing: 11.08.2010
(51) Int. Cl.: H02J 7/34, H02M 3/158

(54) **MANAGEMENT SYSTEM FOR VARIABLE-RESOURCE ENERGY GENERATION SYSTEMS**

(71) Applicant: Ingeteam Power Technology, S.A., 48170 Zamudio (Bizkaia) (ES)
(72) Inventor: GONZÁLEZ SENOSIÁIN, Roberto, E-31621 Sarriguren (ES); CÁRCAR MAYOR, Ainhoa, E-31621 Sarriguren (ES); COLOMA CALAHORRA, Javier, E-31621 Sarriguren (ES)
(74) Representative: Carpintero Lopez, Francisco
(86) International application number: PCT/ES2010/070546
(87) International publication number: WO 2012/020148

(57) **Abstract**

The object of the invention is to provide an energy management system for variable resource energy generating systems, which incorporates means for the storing of energy and the management thereof. The system permits the needs which arise in the power grid to be met, and participates in the regulation of the power grid and contributing to the stability and quality thereof.

## Description

### FIELD OF APPLICATION

The field of application of the present invention is electrical energy generating systems by means of variable resource renewable energies, and more specifically, by means of wind or solar photovoltaic energy.

The object of the invention is to provide an energy management system for variable resource electrical generating systems, which incorporates means for the storing of energy and the management thereof. The system permits the needs which arise in the power grid to be met, and participates in the regulation of the power grid and contributing to the stability and quality thereof.

### BACKGROUND OF THE INVENTION

Within the field of electrical energy generation, conventional generating plants such as thermal or nuclear have means to, by demand of the operator of the power grid, increase or decrease the energy transmitted to the grid depending on the requirements of the power grid at each moment. In recent years, said requirements demanded by the operator of the grid are being extended to variable resource energy generating systems.

Herein, variable resource energy generating systems shall be those generating systems which are characterised by a wide variability in energetic resources. Normally, the variable resource is some type of uncontrollable renewable energy, such as the wind or the sun in systems based on wind or solar power.

The massive integration of renewable energies in the grid requires that the generation fits the demand at all times in order for correct operation thereof.

In order to resolve this problem, a first known solution against the excess of energetic resource is to limit the energy produced by the system. Nevertheless, this method implies moving the system further away from the optimal operation point to decrease the capacity thereof to capture energy, which means that a part of the energetic resource is no longer used and cannot be recovered later.

Another known solution consists of using storage means capable of consuming active power during the periods when there is an excess of energetic resource and return the stored energy to the grid when an energetic resource deficit is produced. This technique also permits a response against active power variation demands by the grid operators or acts in a coordinated manner against frequency variations which require the generation and the energy consumption to be balanced by carrying out primary and secondary regulation functions.

EP2101392 and EP1772939 disclose systems which comprise batteries or other storage means and a bidirectional DC/DC converter which permits the channelling of the excess energy towards said storage means and returns said energy to the DC bus when it is needed. However, these systems present the drawback that to manage 100% of the energy produced DC/DC converters are required of the all of the power of the system. This is often excessively expensive, in addition to increasing the total volume of the system.

### DESCRIPTION OF THE INVENTION

The present invention discloses a system and method of energy management for the connection of a DC voltage source to the power grid. Herein, the term "DC voltage source" refers to a DC voltage source supplied from a variable renewable energy resource, such as, for example, solar photovoltaic energy, wind power, or others. Some examples of DC voltage sources are:
- If the resource is photovoltaic, the DC voltage source could be the photovoltaic panel itself.
- In the event that the resource is wind powered, for a double-feed topology (DFIG) the DC voltage source would be formed by the generator and the AC/DC converter connected to its rotor; for a full converter topology, the DC voltage source would be the generator and the AC/DC converter connected to its stator.

The proposed system combines the action of a DC/DC converter with an additional switching element which permits the accelerated charging and/or discharging of a storage means. In this way, the system is capable of conducting 100% of the energy generated by the system towards the storage means, the DC/DC converter being dimensioned for a lower power.

The energy management system proposed herein for connecting DC voltage sources to the grid includes:
- A DC/AC converter
- At least one control unit
Characterised in that it further comprises:
- A first branch formed by an additional switching element in-series with an energy storage means connected between the terminals of the DC voltage source. Said additional switching element permits the accelerated charging or discharging of the storage system. In a preferred embodiment, the additional switching element is of the diode type. In another preferred embodiment, the storage means is constituted by super-capacitors, or batteries.
- A DC/DC converter connected to the terminals of the DC voltage source and to the storage means. In a preferred embodiment, the DC/DC converter is formed by two switching elements connected in-series to the terminals of the DC voltage source. It additionally includes an inductance connected to the midpoint of said switching elements and to the positive terminal of the storage means, constituting a DC/DC buck-boost converter. In a preferred embodiment, it is possible to dimension the DC/DC converter for a power lesser than that of the system, without losing functionalities.

A second aspect of the invention relates to a method of energy management using the described system which permits controlling the power flow exchanged with the grid through a suitable management of the energy flow between the DC source, the storage means and the grid by means of actuations on the DC/AC converter, the DC/DC converter, the additional switching element and/or the DC voltage source.

An important advantage of the disclosed system is that, by providing an alternative route to the DC/DC converter for the input or output energy of the storage means, it is possible to dimension said DC/DC converter for powers less than the maximum power of the DC source. Thus, when the power exceeds the maximum power of the DC/DC converter, the storage means charges/discharges via the additional switching element. A DC/DC converter dimensioned for lower powers is less voluminous and lighter, thus facilitating the transportation and assembly tasks, and furthermore, it is economically cheaper.

Additionally, in case of a sag of the renewable energetic resource, other conventional sources (such as thermal, combined cycle, hydroelectric, etc.) can act by participating in the secondary regulation. Nevertheless, these sources have slower dynamic power variations than those which can be featured by renewable energy origins which incorporate the system proposed in the present invention.

Therefore, the invention permits the necessary/required adjustments to be made to avoid the drawbacks characteristic of each renewable source such as:
- Absorption of the intrinsic power fluctuations to a renewable energetic resource,
- Current surge of the DC voltage source

Another important advantage of the invention is that it permits a response to the following power requirements:
- Active generated power control.
- Control of the generated power variations.
- Generation of a power reserve.

The proposed invention achieves the previous objectives by means of different kinds of energy management depending on the requirement.

In periods in which the energetic resource available is greater than that required a suitable management of the converters and the additional switching element permits the charging of the storage means to be carried out according to two alternative operational modes: through the DC/DC converter or through the additional switching element. Below, these charging modes are briefly described according to a preferred embodiment:
- Through the DC/DC converter:
   This type of charging permits the DC source and the storage means to work at a different voltage, so that the DC source can work at the voltage corresponding to the maximum power point while the excess energy is stored in the storage means at a lower voltage.
- Through the additional switching element:
   In the event that a reduction of power evacuated to the grid with a dynamic greater than that permitted via the DC/DC converter is required. The charging is performed in accelerated way, activating the additional switching element so that the voltages of the DC voltage source and that of the storage means are made equal.

Alternatively, at moments when the energy required is greater than that supplied by the energetic resource, a suitable management of the converters and the additional switching element permits energy to be released from the storage means towards the grid according to two modes of alternative operation. Below, these two discharging modes are briefly described according to a preferred embodiment:
- Through the DC/DC converter:
   If the power required by the storage means is lower than the power of the DC/DC converter, the discharging is carried out through the DC/DC converter, which permits the working voltages of the DC source and the storage means to be different.
- Through the additional switching element:
   If the power required by the storage means is greater than the power of the DC/DC converter, the discharging is carried out through the additional switching element. This permits wide variations of the energetic resource to be met without the necessity of overdimensioning the DC/DC converter. In order to operate the system so that the accelerated discharging of the storage means is possible, it is necessary to maintain the voltage of the DC voltage source at a value superior to the minimum operating voltage. In this manner, at the moment when an extra power supply is quickly required, this is achieved immediately by decreasing the voltage value of the DC voltage source to a value lower than or equal to that of the storage means.

In a preferred embodiment, the proposed invention permits a control of the active power generated by the system. The control of said power is performed based on orders which can be defined by the grid operator or the supervising controller of the system or the control unit or internally according to tables, parameters, etc. The orders of the grid operator can be sent to the control unit of each individual facility through a general controller of the facility. The order can also be based on power variations according to ramps, or a profile which permits a response to be given to the rest of the generating sources of the grid system.

Additionally, the system proposed herein can counteract power variations of the variable resource by adapting the output of the system to the dynamics required by the rest of the generating sources of the grid system. In the event of a sag of the renewable energetic resource, other conventional sources (such as thermal, combined cycle, hydroelectric, etc.) can act by participating in the secondary regulation. Nevertheless, these sources have slower dynamic power variations than those which can be featured by the variable resources. For example, conventional energy sources have dynamic power variations of around 4% per minute, while the dynamics of the variable resource generating systems can reach 80% in a few seconds. In the event of a sag of the variable resource greater than that which can counteract the conventional sources, the system proposed herein would supply the required difference with the response dynamic demanded.

In a preferred embodiment of the invention, the charging of the storage means could be performed by supplying the system from the grid via the AC/DC converter. This permits the storage means to act as controlled charge with an energy balance of the facility negative or lower than that established by the DC voltage source.

In the case of facilities formed by several generation units, the storage solution can be found in each generation unit or in the facility, for example at the output of the system. The present invention suggests the storage considering each individual facility (instead of all of the facilities), so that the use of the energetic resource is optimised.

The voltage of the storage means is selected so that it is less than the nominal value of the DC source and greater than the minimum operational voltage required by the DC/AC converter, in accordance with the grid voltage and the topology thereof.

Below, in order to facilitate a better understanding of this specification and forming an integral part thereof, attached are figures wherein, in an illustrative and non-limitative manner, the object of the invention has been represented.

### BRIEF DESCRIPTION OF THE DRAWINGS

Figure 1 shows a preferred embodiment of the invention including the additional switching element which permits the accelerated charging/discharging of the storage means.
Figure 2 shows another preferred embodiment of the system of the invention wherein the additional switching element is a diode.

### DESCRIPTION OF A PREFERRED EMBODIMENT

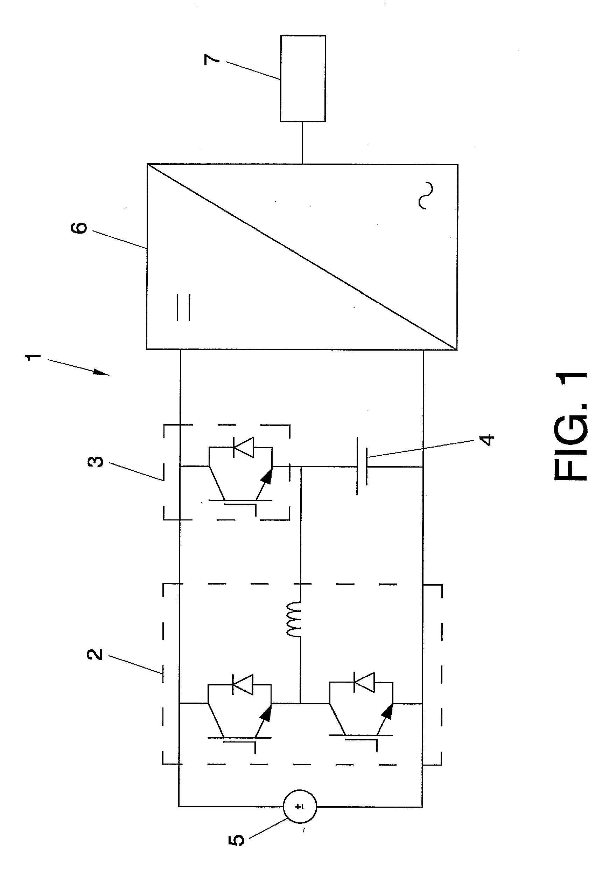

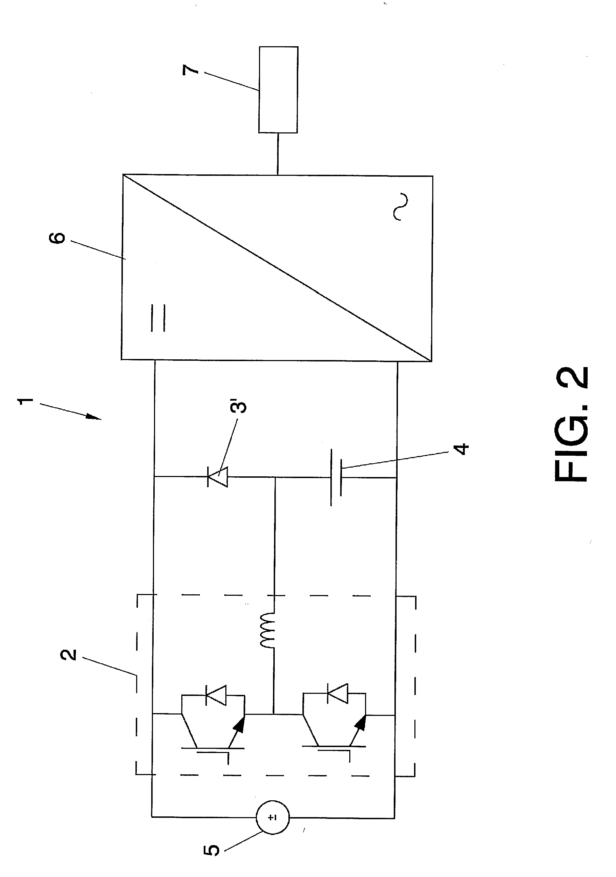

Figs. 1 and 2 shows examples of the system (1) of the present invention wherein the DC source (5) is observed connected to the first branch which comprises a DC/DC converter (2) and to the second branch which comprises an additional switching element (3, 3') in-series with the storage means (4). The DC/DC converter (2) of this example consists of two in-series switching elements and an inductance connected between the midpoint of said two switching elements and the midpoint of the second branch, between the additional switching element (3, 3') and the storage means (4). As can be observed in the figures, each switching element of the DC/DC converter (2) is formed by a transistor arranged in anti-parallel position with a diode. Fig. 1 also shows an additional switching element (3) formed by a transistor with a diode in anti-parallel position, while the additional switching element (3') from Fig. 2 solely comprises a diode. Lastly, these elements are connected to a DC/AC converter (6), which in turn is connected to the power grid (7).

The system proposed herein is characterised in that at least one control unit controls the output power of the system (1), managing the energy flow between the DC source (5), the storage means (4) and the grid (7), acting on the DC/AC converter (6), the DC/DC converter (2) and the first branch formed by a switching element (3, 3') and/or the DC voltage source (5).

Below are described the different modes of operation of this system (1). In the first place, in periods during which the energetic resource is greater than that required, the system (1) permits the storage means (4) to be charged in two different ways:
- Through the DC/DC converter (2):
   This type of charge allows the DC source (5) to work at a different voltage than that of the storage means (4). This permits the maximisation of the energy produced, making the DC source (5) work at the voltage corresponding to that of the maximum power point in the case of photovoltaic and wind powered systems.
      Furthermore, the charging of the storage means (4) will be governed by a control unit which will determine the dynamic and the charging level. In wind powered or photovoltaic applications, for example it will permit the load to be kept below its nominal value so that, if required, a limitation of the power evacuated to the grid (7) can conduct the excess to the storage system (4).
- Through the additional switching element (3, 3'):
   In the event that a reduction of power evacuated to the grid (7) with a dynamic greater than that permitted via the DC/DC converter (2) is required. The charging is performed by activating the additional switching element (3, 3') so that the voltages of the DC voltage source (5) and that of the storage means (4) are made equal.
      Specifically, for wind powered systems, this way of operation permits the absorption of gusts of wind, thereby reducing the mechanical loads of the system and maintaining control of the DC voltage source (5) against transients as a consequence of grid (7) events. The solution proposed is thus suggested as an alternative to conventional systems such as the incorporation of a brake chopper, where the evacuated energy cannot be recovered. Nevertheless, the storage means (4) of the proposed invention permits the return of the energy to the grid (7) once the operation point has been re-established within the normal range.

In a preferred embodiment of the invention, the charging of the storage means (4) can be performed by supplying the storage means (4) from the grid (7) via the AC/DC converter (6). This permits the storage means (4) to act as controlled load with an energy balance of the facility negative or lower than that established by the DC voltage source (5).

On the other hand, at moments when the energy required by the grid (7) is greater than that supplied by the energetic resource, energy is discharged from the storage means (4) towards the grid (7). There are two modes of discharge:
- Through the DC/DC converter (2):
   If the power required by the storage means (4) is lower than the power of the DC/DC converter (2), the discharging is carried out through the DC/DC converter (2), which permits the working voltages of the DC source (5) and the storage means (4) to be different.
- Through the additional switching element (3, 3'):
   If the power required by the storage means (4) is greater than the power of the DC/DC converter (2), the discharging is carried out through the additional switching element (3, 3'). This permits wide variations of the energetic resource to be met without the necessity of overdimensioning the DC/DC converter (2). In order to operate the system (1) so that the accelerated discharging of the storage means (4) is possible, it is necessary to maintain the voltage of the DC voltage source (5) at a value superior to the minimum operating voltage. In this manner, at the moment when an extra power supply is quickly required, this is achieved immediately by decreasing the voltage value of the DC voltage source (5) to a value lower than or equal to that of the storage means (4), causing the voltages of the DC voltage source (5) and of the storage means (4) to become equal through the discharging of the storage means (4).

The minimum operating voltage shall be determined by the application or origin of the energetic resource. In the case of wind powered applications, the minimum operating voltage shall be that such that it functions within the safety limits, so that both the grid (7) voltage and that imposed by the electrical machine must be taken into account. This voltage, whether it is that of a rotor in double-feed topologies, or that of a stator, in full converter topologies, is in turn imposed by the rotational velocity.

## Claims

1. Energy management system (1) for connecting DC voltage sources (5) to the grid (7) which includes:
- a DC/AC converter (6) connected to the terminals of the DC source (5);
- at least one control unit;
**characterised in that** it further comprises:
- a first branch formed by an additional switching element (3, 3') in-series with an energy storage means (4) connected between the terminals of the DC voltage source (5);
- a DC/DC converter (2) connected to the terminals of the DC voltage source (5) and to the storage means (4).

2. System (1) according to claim 1, wherein the DC/DC converter (5) is formed by:
- a branch formed by two switching elements connected in-series to the terminals of the DC voltage source (5); and
- an inductance connected to the midpoint of said switching elements and to the positive terminal of the storage means (4).

3. System (1) according to claim 2, wherein each switching element of the DC/DC converter (5) comprises a transistor with a diode in anti-parallel position.

4. System (1) according to any of the previous claims wherein the additional switching element (3, 3') is selected from between a diode (3') and a transistor with a diode in anti-parallel position (3).

5. System (1) according to any of the previous claims wherein the DC/DC converter (2) is of the buck-boost type.

6. System (1) according to any of the previous claims wherein the storage means (4) is selected from between super-capacitors and batteries.

7. System (1) according to claim 1, wherein the DC voltage source is supplied from a renewable energetic resource of the photovoltaic or wind powered type.

8. Energy management method for a system formed by:
- a DC/AC converter (6) connected to the terminals of the DC source (5)
- a control unit
- a first branch formed by an additional switching element (3, 3') in-series with an energy storage means (4) connected between the terminals of the DC voltage source (5)
- a DC/DC converter (2) connected to the terminals of the DC voltage source (5) and to the storage means (4).
**characterised in that** it comprises controlling the power flow exchanged with the grid (7) acting on the DC/AC converter (6), the DC/DC converter (2), the additional switching element (3, 3) and/or the DC source (5).

9. Method according to claim 8 wherein the control of the output power of the system (1) is carried out based on an order.

10. Method according to claim 9 wherein the order is determined by the grid operator or the supervising controller of the system or the control unit based on tables or parameters.

11. Method according to claim 10 wherein the order is based on power variations according to ramps, or a profile which permits a response to be given to the rest of the generating sources of the grid system.

12. Method according to claim 8 wherein the energy flow from the storage means (4) towards the DC/AC converter is channelled through the additional switching element (3, 3') and/or through the DC/DC converter (2).

13. Method according to claim 8 wherein the control unit controls the voltage of the DC source (5) depending on the energy flow.

14. Method according to claim 8, wherein the storage means (4) is kept below its nominal load value to absorb current surges due to grid (7) events and to control the voltage of the DC source (5).

15. Method according to claim 8, wherein the storage means (4) is charged or discharged through the DC/DC converter (2).

16. Method according to claim 8, wherein the storage means (4) is charged or discharged through the additional switching element (3, 3').

17. Method according to claim 8, wherein the storage means (4) is charged or discharged from the grid (7) through the DC/AC converter (6).
